# EUROPÄISCHE PATENTSCHRIFT

(11) **EP 1 072 645 B1**
(45) Veröffentlichungstag und Bekanntmachung des Hinweises auf die Patenterteilung: **29.05.2002**
(21) Anmeldenummer: 00116012.6
(22) Anmeldetag: 26.07.2000
(51) Int. Cl.: C08L 29/14, C08L 1/00, C08K 7/02, C08K 5/098

(54) **Verbundwerkstoff**
Composite material
Matériau composite

(30) Priorität: 30.07.1999 DE 19936002
(43) Veröffentlichungstag der Anmeldung: 31.01.2001
(73) Patentinhaber: A.W. Faber- Castell Unternehmensverwaltung GmbH & Co., 90547 Stein (DE)
(72) Erfinder: Appel, Reiner, 90522 Oberasbach (DE); Lugert, Gerhard Dr., 90431 Nürnberg (DE); von Godin, Harald, 90522 Oberasbach (DE)
(74) Vertreter: Mörtel, Alfred, Dr. Dipl.-Phys.

(56) Entgegenhaltungen:
- DE-A- 2 234 737
- DE-A- 19 855 325
- US-A- 5 346 930

## Beschreibung

Die Erfindung betrifft einen Verbundwerkstoff mit einer Bindemittelmatrix und wenigstens einem darin eingelagerten, verstärkenden, insbesondere faserartigen Füllstoff. In EP 0518018 ist ein Verbundwerkstoff beschrieben, bei dem als Bindemittel ein wärmehärtbares Harz verwendet wird. Als Bindemittel werden aber auch thermoplastisch erweichbare polymere Stoffe eingesetzt, die bei erhöhter Temperatur mit den Füllstoffen innig vermischt werden und nach dem Erkalten Werkstoffe ergeben, die wieder erweichbar und durch Extrusion oder im Spritzgussverfahren weiterverarbeitbar sind. Ein solches Material ist in US 5,658,998 beschrieben. Aus DE 198 55325 A1 sind Verbundwerkstoffe mit einer Bindemittelmatrix aus biologisch abbaubaren Kunststoffen und Sägespänen oder Cellulosefasern als Füllstoff bekannt.

Aufgabe der Erfindung ist es, einen weiteren Verbundwerkstoff vorzuschlagen, der sich im Extrusions- oder Spritzgussverfahren weiterverarbeiten lässt.

Diese Aufgabe wird gemäß Anspruch 1 durch einen Verbundwerkstoff gelöst, dessen Bindemittel Polyvinylbutyral ist und der als weitere Bestandteile wenigstens eine ,Fettsäure und/ oder ein Fettsäurederivat mit einem Anteil von mindestens 5 Gew.% und einen in die Matrix eingelagerten, verstärkenden Füllstoff enthält. Mit der vorgeschlagenen Kombination aus Polyvinylbutyral als Bindemittel und Fettsäure bzw. Fettsäurederivat lassen sich eine Vielzahl unterschiedlicher Füllstoffe binden, wodurch sich hinsichtlich der erzielbaren Materialeigenschaften, etwa einer späteren spanenden Bearbeitbarkeit eine große Variationsbreite ergibt. Mit Polyvinylbutyral kann ein großer Anteil von Füllstoffen, vorzugsweise von mindestens 40 Gew.% gebunden werden, so dass die Materialeigenschaft in hohem Maße durch den jeweils zugesetzten Füllstoff bestimmt werden können. Die Verarbeitung der Verbundwerkstoffe etwa in Mischern, Knetern, Planetenwalzenextrudern, Mischextrudern und Plast-Agglomerator-Anlagen, wird durch Fettsäuren wie Stearinsäure, Palmitinsäure oder Ölsäure bzw. deren Derivaten erleichtert. Bevorzugt werden die Fettsäuresalze Lithium-, Natrium-, Kalium-, Calcium, Zink-, Magnesiumstearat und Magnesiummyristat verwendet. Die damit hergestellten Verbundwerkstoffe lassen sich problemlos durch Extrudieren, Spritzgießen oder auch durch Sintern weiterverarbeiten. Mit Alkalifettsäuresalzen lassen sich Verbundwerkstoffe mit einer Teilwasserlöslichkeit herstellen. Wasserfeste Werkstoffe dagegen werden mit Fettsäuresalzen mehrwertiger Metalle, etwa mit Erdalkalisalzen, erhalten. Das vorgeschlagene Bindemittel ist darüber hinaus umweltverträglich, die damit hergestellten Gegenstände sind leicht biologisch abbaubar. Besonders vorteilhaft ist der Verbundwerkstoff als Ersatz für Holz als Ummantelung von Farb-, Blei- und Kosmetikminen einsetzbar. Ein weiterer Vorteil ist, dass der vorgeschlagene Werkstoff bei unterhalb 180°C liegenden Temperaturen verarbeit- bzw. compoundierbar ist. Aufgrund der relativ niedrigen Verarbeitungstemperaturen können temperaturlabile Bestandteile, z.B. Farbstoffe oder Durftstoffe beigemischt werden.

Bevorzugt werden pflanzliche Fasermaterialien als Füllstoffe eingesetzt, da sie die biologische Abbaubarkeit des Werkstoffs unterstützen und als nachwachsende Rohstoffe umweltschonend sind. Besonders gute Ergebnisse werden mit Holzfasern in Form von Sägespänen oder Sägemehl, Cellulosefasern, beispielsweise in Form von Altpapier und Baumwollfasern erreicht. Darüber hinaus sind auch Füllstoffe wie Textilfasern und auch Stärke einsetzbar. Mit einem hohen Anteil an Holzfasern lassen sich holzähnliche Werkstoffe herstellen, die jedoch zum Teil bessere Eigenschaften als natürliches Holz haben. Beispielsweise haben sie eine homogenere Struktur, was sich besonders bei spitzbaren Stiftumhüllungen positiv auswirkt.

Eine bevorzugte Rahmenrezeptur enthält 1 bis 35 Gew.% Polyvinylbutyral, 5 bis 35 Gew.% Fettsäure und/oder Fettsäurederivat und 40 bis 80 Gew.% Füllstoff.

Insbesondere das Verarbeitungsverhalten lässt sich durch Zusatz von 1 bis 5 Gew.% eines Additivs aus der Gruppe primäres Fettsäureamid, sekundäres Fettsäureamid und sekundäres Fettsäurediamid positiv beeinflussen. Die Beimengung von Wachs in geringer Menge wirkt sich günstig auf die Spanbildung des Werkstoffes aus, was etwa bei Stiftumhüllungen von Bedeutung ist. Bevorzugte Wachse sind Paraffinwachs, Japanwachs, Japanwachsersatz, Wollwachs, Bienenwachs und Polyethylenwachs.

Neben den erwähnten Füllstoffen können auch noch anorganische Füllstoffe, vorzugsweise Calciumcarbonat, Calciumphosphat, Kaolin, Bimsmehl, Talkum und Glimmer, beispielsweise in einer Menge von etwa 10 Gew.% vorhanden sein. Außerdem können auch noch synthetische Füllstoffe wie halogenierte Kunststoffe, Polyester, Polyamide, Polyolefine, und Polystyrol beigemischt werden.

Zur Färbung des Verbundwerkstoffes stehen eine Vielzahl unterschiedlicher Färbemittel, etwa anorganische und organische Pigmente, metallisch glänzende Pigmente wie Aluminium- oder Bronzeblättchen zur Verfügung. Aufgrund der niedrigen Verarbeitungstemperatur des Verbundwerkstoffes sind auch hinsichtlich der Temperaturstabilität des Färbemittels kaum Einschränkungen vorhanden.

Schließlich ist es noch denkbar, Dass zur Erhöhung der mechanischen Festigkeit Harze, etwa Acrylsäureharz, Kolophonium und Schellack zugesetzt werden.

Der erfindungsgemäße Werkstoff kann äußerst vielseitig eingesetzt werden. Insbesondere eignet er sich zur Herstellung von Stiftumhüllungen entweder in herkömmlicher Weise aus mit dem Verbundwerkstoff gefertigten Brettchen oder durch Coextrusion. Der Werkstoff eignet sich aber auch für Gegenstände wie Profilleisten, Möbel, Verpackungen, Gerätegehäuse und Essstäbchen. Platten aus dem Werkstoff können als Mal- und Zeichengründe verwendet werden. Der Werkstoff lässt sich leicht spanabhebend bearbeiten und eignet sich daher etwa in Quader- oder Zylinderform für kunstgewerbliche Drechsel- und Schnitzarbeiten.

### Beispiel 1:

| | |
|---|---|
| Polyvinylbutyral | 15% |
| Calciumstearat | 15% |
| Stearinsäuremonoethanolamid | 2% |
| Bienenwachs | 2% |
| Dipergierhilfsmittel | 1% |
| Cellulosefasern (mittlere Länge 0,1mm) | 65% |

Ein solcher Verbundwerkstoff eignet sich insbesondere als Holzersatz für die Ummantelung von Farb-, Blei- und Kosmetikstiften. Als Dispergierhilfsmittel wird vorzugsweise Surfynol 104 S, ein von der Firma "Air products and Chemicals Inc.",06217 Merseburg hergestelltes Produkt, eingesetzt.

### Beispiel 2:

| | |
|---|---|
| Polyvinylbutyral | 20% |
| Zinkstearat | 20% |
| Calciumcarbonat | 10% |
| sekundäres Fettsäurediamid | 2% |
| Sägemehl (Partikelgröße < 5mm) | 48% |

Dieser Verbundwerkstoff hat nicht zuletzt wegen seines hohen Gehaltes an Sägespänen holzähnliche Eigenschaften und findet daher zur Herstellung von bisher aus Holz bestehenden Gegenständen Verwendung. Durch Zusatz von UV-absorbierenden Chemikalien oder auch von anderen, für den Holzschutz üblichen Stoffen, kann der Verbundwerkstoff auch im Außenbereich verwendet werden. Die schützenden Chemikalien bzw. Stoffe können entweder nachträglich auf die extrudierten, spritzgegossenen oder auch gesinterten Formteile aufgebracht oder der Ausgangsmasse bei der Compoundierung beigegeben werden. Die Holzähnlichkeit kann durch Zugabe von entsprechenden Duftstoffen noch gesteigert werden.

### Beispiel 3:

| | |
|---|---|
| Polyvinylbutyral | 15% |
| Zinkstearat | 5% |
| Talkum | 5% |
| Pigment Green 7(C.I. 74260) | 1% |
| Bienenwachs | 1,5% |
| Duftaroma | 0,5% |
| Cellulosefasern (mittlere Länge 1mm) | 72% |

Eine weitere bevorzugte Ausführungsform ist folgenden Verbundwerkstoff :

| | |
|---|---|
| Polyvinylbutyral | 16% |
| Magnesium myristat | 4% |
| Talkum | 5% |
| Pigment green 7(C.I. 74260) | 1% |
| Bienenwachs | 1,5% |
| Duftaroma | 0.5% |
| Cellulosefasern (mittlere Länge 1mm) | 72% |

## Patentansprüche

1. Verbundwerkstoff mit einer polymeren Bindemittelmatrix und wenigstens einem darin eingelagerten verstärkenden, insbesondere faserartigen Füllstoff,
**dadurch gekennzeichnet,**
**dass** das Bindemittel Polyvinylbutyral ist und dass wenigstens eine Fettsäure und/oder ein Fettsäurederivat mit einem Gehalt von mindestens 5 Gew.% enthalten ist.

2. Verbundwerkstoff nach Anspruch 1,
**dadurch gekennzeichnet**
**dass** mindestens 40 Gew.% Füllstoff enthalten sind.

3. Verbundwerkstoff nach Anspruch 1 oder 2,
**gekennzeichnet durch**
ein Fettsäuresalz aus der Gruppe Lithium-, Natrium-, Kalium-, Calcium-, Zink-, Magnesiumstearat und Magnesiummyristat.

4. Verbundwerkstoff nach Anspruch 1, 2 oder 3,
**gekennzeichnet durch**
ein pflanzliches Fasermaterial als Füllstoff.

5. Verbundwerkstoff nach einem der vorhergehenden Ansprüche,
**gekennzeichnet durch**
wenigstens einen Füllstoff aus der Gruppe Cellulosefasern, Holzfasern in Form von Sägespänen oder Sägemehl, Baumwoll- und Textilfasern.

6. Verbundwerkstoff nach einem der vorhergehenden Ansprüche,
**dadurch gekennzeichnet,**
**dass** als Füllstoff Stärke enthalten ist.

7. Verbundwerkstoff nach einem der vorhergehenden Ansprüche,
**gekennzeichnet durch**
einen Gehalt (Gew.%) von
1 - 35% Polyvinylbutyral
5 - 35% Fettsäure und/oder Fettsäurederivat und
40 - 80% Füllstoff.

8. Verbundwerkstoff nach einem der Ansprüche 1 bis 7,
**dadurch gekennzeichnet,**
**dass** wenigstens ein Additiv aus der Gruppe primäre Fettsäureamide, sekundäre Fettsäureamide und sekundäre Fettsäurediamide enthalten ist.

9. Verbundwerkstoff nach einem der Ansprüche 1 bis 8,
**dadurch gekennzeichnet,**
**dass** wenigstens ein Wachs enthalten ist.

10. Verbundwerkstoff nach Anspruch 9,
**dadurch gekennzeichnet**
**dass** das Wachs ausgewählt ist aus der Gruppe Paraffinwachs, Japanwachs, Japanwachsersatz, Wollwachs, Bienenwachs und Polyethylenwachs.

11. Verbundwerkstoff nach einem der Ansprüche 4 bis 10
**dadurch gekennzeichnet**
**dass** zusätzlich ein mineralischer Füllstoff enthalten ist.

12. Verbundwerkstoff nach Anspruch 11,
**gekennzeichnet durch**
wenigstens einen Füllstoff aus der Gruppe Calciumcarbonat, Kaolin, Bimsmehl, Calciumphosphat, Talkum und Glimmer.

13. Verbundwerkstoff nach einem der Ansprüche 3 bis 12,
**gekennzeichnet durch**
dass zusätzlich wenigstens ein synthetischer Füllstoff aus der Gruppe halogenierte Kunststoffe, Polyester, Polyamid, Polyolefin und Polystyrol enthalten ist.

14. Verbundwerkstoff nach einem der Ansprüche 1 bis 13,
**dadurch gekennzeichnet**
**dass** ein Farbmittel enthalten ist.

15. Verbundwerkstoff nach einem der Ansprüche 1 bis 14,
**dadurch gekennzeichnet**
**dass** ein Duftstoff enthalten ist.

16. Verbundwerkstoff nach einem der Ansprüche 1 bis 15,
**dadurch gekennzeichnet**
**dass** ein synthetisches oder natürliches Harz enthalten ist.

17. Verbundmaterial nach einem der Ansprüche 1 bis 16,
**dadurch gekennzeichnet**
**dass** ein UV-absorbierender Hilfsstoff enthalten ist.

18. Verbundwerkstoff nach Anspruch 1,
**gekennzeichnet durch**
| | |
|---|---|
| folgende Zusammensetzung (Gewichtsprozent): | |
| Polyvinylbutyral | 15% |
| Calciumstearat | 15% |
| Stearinsäuremonoethanolamid | 2% |
| Bienenwachs | 2% |
| Dispergierhilfsmittel | 1% |
| Cellulosefasern (mittlere Länge 0,1 mm) | 65% |

19. Verbundwerkstoff nach Anspruch 1,
**gekennzeichnet durch**
| | |
|---|---|
| folgende Zusammensetzung (Gew.%): | |
| Polyvinylbutyral | 20% |
| Zinkstearat | 20% |
| Calciumcarbonat | 10% |
| sekundäres Fettsäurediamid | 2% |
| Sägemehl (Partikelgröße < 5mm) | 48% |

20. Verbundmaterial nach Anspruch 1,
**gekennzeichnet durch**
| | |
|---|---|
| folgende Zusammensetzung (Gew. %): | |
| Polyvinylbutyral | 16% |
| Magnesiummyristat | 4% |
| Talkum | 5% |
| Pigment green 7 (C.I 74260) | 1% |
| Bienenwachs | 1,5% |
| Duftaroma | 0,5% |
| Cellulosefasern (mittlere Länge 1mm) | 72% |

21. Verbundwerkstoff nach Anspruch 1,
**gekennzeichnet durch**
| | |
|---|---|
| folgende Zusammensetzung (Gew.%): | |
| Polyvinylbutyral | 15% |
| Zinkstearat | 5% |
| Talkum | 5% |
| Pigment green 7 (C.I 74260) | 1% |
| Bienenwachs | 1,5% |
| Duftaroma | 0,5% |
| Cellulosefasern (mittlere Länge 1mm) | 72% |

22. Verwendung eines Materials gemäß den Ansprüchen 1 bis 21 zur Herstellung der Ummantelung von Farbstift-, Bleistift- und Kosmetikminen.

23. Farbstift, Bleistift oder Kosmetikstift mit einer Ummantelung aus einem Verbundmaterial nach einem der Ansprüche 1 bis 21.

## Claims

1. A composite material with a polymeric binder matrix and at least one strengthening, in particular fibre-like, filler incorporated therein,
**characterized in that**
the binder is polyvinyl butyral and that at least one fatty acid and/or one fatty acid derivative is present in a content of at least 5% by weight.

2. Composite material according to Claim 1,
**characterized in that**
at least 40% by weight of filler are present.

3. Composite material according to Claim 1 or 2,
**characterized by**
a fatty acid salt from the group consisting of lithium stearate, sodium stearate, potassium stearate, calcium stearate, zinc stearate, magnesium stearate and magnesium myristate.

4. Composite material according to Claim 1, 2 or 3,
**characterized by**
a vegetable fibre material as filler.

5. Composite material according to one of the preceding claims,
**characterized by**
at least one filler from the group consisting of cellulose fibres, wood fibres in the form of sawdust or saw flour, cotton fibres and textile fibres.

6. Composite material according to one of the preceding claims,
**characterized in that**
starch is present as a filler.

7. Composite material according to one of the preceding claims,
**characterized by**
a content (% by weight) of
1-35% of polyvinyl butyral
5-35% of fatty acid and/or fatty acid derivative and
40-80% of filler.

8. Composite material according to one of Claims 1 to 7,
**characterized in that**
at least one additive from the group consisting of primary fatty acid amides, secondary fatty acid amides and secondary fatty acid diamides is present.

9. Composite material according to one of Claims 1 to 8,
**characterized in that**
at least one wax is present.

10. Composite material according to Claim 9,
**characterized in that**
the wax is chosen from the group consisting of paraffin wax, Japan wax, Japan wax substitute, wool wax, beeswax and polyethylene wax.

11. Composite material according to one of Claims 4 to 10,
**characterized in that**
a mineral filler is additionally present.

12. Composite material according to Claim 11,
**characterized by**
at least one filler from the group consisting of calcium carbonate, kaolin, pumice flour, calcium phosphate, talc and mica.

13. Composite material according to one of Claims 3 to 12,
**characterized in that**
at least one synthetic filler from the group consisting of halogenated plastics, polyester, polyamide, polyolefin and polystyrene is additionally present.

14. Composite material according to one of Claims 1 to 13,
**characterized in that**
a colorant is present.

15. Composite material according to one of Claims 1 to 14,
**characterized in that**
a fragrance is present.

16. Composite material according to one of Claims 1 to 15,
**characterized in that**
a synthetic or natural resin is present.

17. Composite material according to one of Claims 1 to 16,
**characterized in that**
a UV-absorbing auxiliary is present.

18. Composite material according to Claim 1,
**characterized by**
| | |
|---|---|
| the following composition (% by weight): | |
| polyvinyl butyral | 15% |
| calcium stearate | 15% |
| stearic acid monoethanolamide | 2% |
| beeswax | 2% |
| dispersion auxiliary | 1% |
| cellulose fibres (average length 0.1 mm) | 65% |

19. Composite material according to Claim 1,
**characterized by**
| | |
|---|---|
| the following composition (% by weight): | |
| polyvinyl butyral | 20% |
| zinc stearate | 20% |
| calcium carbonate | 10% |
| secondary fatty acid diamide | 2% |
| saw flour (particle size < 5 mm) | 48% |

20. Composite material according to Claim 1,
**characterized by**
| | |
|---|---|
| the following composition (% by weight): | |
| polyvinyl butyral | 16% |
| magnesium myristate | 4% |
| talc | 5% |
| pigment green 7 (C.I. 74260) | 1% |
| beeswax | 1.5% |
| scent aroma | 0.5% |
| cellulose fibres (average length 1 mm) | 72% |

21. Composite material according to Claim 1,
**characterized by**
| | |
|---|---|
| the following composition (% by weight): | |
| polyvinyl butyral | 15% |
| zinc stearate | 5% |
| talc | 5% |
| pigment green 7 (C.I. 74260) | 1% |
| beeswax | 1.5% |
| scent aroma | 0.5% |
| cellulose fibres (average length 1 mm) | 72% |

22. Use of a material according to Claims 1 to 21 for the production of the encasement of colour pencil leads, lead pencil leads and cosmetic leads.

23. Coloured pencil, lead pencil or cosmetic pencil having an encasement made from a composite material according to one of Claims 1 to 21.

## Revendications

1. Matériau composite avec une matrice de liant polymère et au moins une charge de renforcement déposée dans celle-ci, en particulier de type fibreuse, **caractérisé en ce que** le liant est du polyvinylbutyral et **en ce que** sont contenus au moins un acide gras et/ou un dérivé d'acide gras avec une teneur d'au moins 5 % en poids.

2. Matériau composite selon la revendication 1, **caractérisé en ce que** sont contenus au moins 40 % en poids de charge.

3. Matériau composite selon la revendication 1 ou 2, **caractérisé par** un sel d'acide gras choisi parmi le stéarate de lithium, de sodium, de potassium, de calcium, de zinc, de magnésium et le myristate de magnésium.

4. Matériau composite selon la revendication 1, 2 ou 3, **caractérisé par** une matière de fibre végétale comme charge.

5. Matériau composite selon l'une quelconque des revendications précédentes, **caractérisé par** au moins une charge choisie parmi des fibres de cellulose, des fibres de bois dans la forme de copeaux de bois ou de sciure de bois, des fibres de coton et des fibres textiles.

6. Matériau composite selon l'une quelconque des revendications précédentes, **caractérisé en ce que** de l'amidon est contenu comme charge.

7. Matériau composite selon l'une quelconque des revendications précédentes, **caractérisé par** une teneur (% en poids) de
1 - 35 % de polyvinylbutyral
5 - 35 % d'acide gras et/ou de dérivé d'acide gras et
40 - 80 % de charge.

8. Matériau composite selon l'une quelconque des revendications 1 à 7, **caractérisé en ce qu'**est contenu au moins un additif choisi parmi des amides d'acides gras primaires, des amides d'acides gras secondaires et des diamides d'acides gras secondaires.

9. Matériau composite selon l'une quelconque des revendications 1 à 8, **caractérisé en ce qu'**est contenue au moins une cire.

10. Matériau composite selon la revendication 9, **caractérisé en ce que** l'on choisit la cire parmi une cire de paraffine, une cire du Japon, un substitut de cire du Japon, une cire de suint, une cire d'abeille et une cire de polyéthylène.

11. Matériau composite selon l'une quelconque des revendications 4 à 10, **caractérisé en ce qu'**est en outre contenue une charge minérale.

12. Matériau composite selon la revendication 11, **caractérisé par** au moins une charge choisie parmi le carbonate de calcium, le kaolin, la farine de pierre ponce, le phosphate de calcium, la stéatite et le mica.

13. Matériau composite selon l'une quelconque des revendications 3 à 12, **caractérisé en ce qu'**est contenue en outre au moins une charge synthétique choisie parmi des matières plastiques halogénées, du polyester, du polyamide, une polyoléfine et du polystyrène.

14. Matériau composite selon l'une quelconque des revendications 1 à 13, **caractérisé en ce qu'**est contenu un colorant.

15. Matériau composite selon l'une quelconque des revendications 1 à 14, **caractérisé en ce qu'**est contenu un parfum.

16. Matériau composite selon l'une quelconque des revendications 1 à 15, **caractérisé en ce qu'**est contenue une résine synthétique ou naturelle.

17. Matériau composite selon l'une quelconque des revendications 1 à 16, **caractérisé en ce qu'**est contenu un auxiliaire absorbant les UV.

18. Matériau composite selon la revendication 1, **caractérisé par** la composition suivante (% en poids):
| | |
|---|---|
| polyvinylbutyral | 15 % |
| stéarate de calcium | 15 % |
| monoéthanolamide d'acide stéarique | 2 % |
| cire d'abeille | 2 % |
| agent dispersant | 1 % |
| fibres de cellulose (longueur moyenne 0,1 mm) | 65 % |

19. Matériau composite selon la revendication 1, **caractérisé par** la composition suivante (% en poids) :
| | |
|---|---|
| polyvinylbutyral | 20 % |
| stéarate de zinc | 20 % |
| carbonate de calcium | 10 % |
| diamide d'acide gras secondaire | 2 % |
| sciure de bois (taille de particules < 5 mm) | 48 % |

20. Matériau composite selon la revendication 1, **caractérisé par** la composition suivante (% en poids) :
| | |
|---|---|
| polyvinylbutyral | 16 % |
| myristate de magnésium | 4 % |
| stéatite | 5 % |
| pigment vert 7 (C.I 74260) | 1 % |
| cire d'abeille | 1,5 % |
| parfum | 0,5 % |
| fibres de cellulose (longueur moyenne 1 mm) | 72 % |

21. Matériau composite selon la revendication 1, **caractérisé par** la composition suivante (% en poids) :
| | |
|---|---|
| polyvinylbutyral | 15 % |
| stéarate de zinc | 5 % |
| stéatite | 5 % |
| pigment vert 7 (C.I 74260) | 1 % |
| cire d'abeille | 1,5 % |
| parfum | 0,5 % |
| fibres de cellulose (longueur moyenne 1 mm) | 72 % |

22. Utilisation d'un matériau selon les revendications 1 à 21, pour la préparation du revêtement de mines de crayons de couleur, de crayons et de mines cosmétiques.

23. Crayon de couleur ou crayon cosmétique avec un revêtement constitué d'un matériau composite selon l'une quelconque des revendications 1 à 21.
